# EUROPÄISCHE PATENTSCHRIFT

(11) **EP 1 510 698 B1**
(45) Veröffentlichungstag und Bekanntmachung des Hinweises auf die Patenterteilung: **22.04.2015**
(21) Anmeldenummer: 04016845.2
(22) Anmeldetag: 16.07.2004
(51) Int. Cl.: F04D 29/12, F04D 15/00, F16J 15/34

(54) **Trockenlaufschutz**
Device for protecting a pump against dry running
Dispositif pour la protection d'une pompe dans l'absence d'eau

(30) Priorität: 26.08.2003 DE 20313289 U
(43) Veröffentlichungstag der Anmeldung: 02.03.2005
(73) Patentinhaber: Herborner Pumpenfabrik J.H.Hoffmann GmbH & Co., 35745 Herborn (DE)
(72) Erfinder: Habicht, Reiner, 35686 Dillenburg-Donsbach (DE); Kutschki, Guido, 35745 Herborn (DE)
(74) Vertreter: Patentanwälte Olbricht Buchhold Keulertz

(56) Entgegenhaltungen:
- DE-U1- 20 105 322
- US-B1- 6 250 876

## Beschreibung

Die Erfindung betrifft einen Trockenlaufschutz für eine Gleitringdichtung eines Pumpensystems gemäß dem Oberbegriff von Anspruch 1.

Bekannt sind Sicherheitsvorrichtungen zum Schutz von Kreiselpumpen vor Beschädigung durch Festgehen, wenn der Füllstand im Pumpengehäuse absinkt. Laut DE-A-339 722 wird der Antrieb dann einfach schwimmergesteuert abgeschaltet. Gemäß DE-A1-29 25 830 wird die Abschaltung von einer in den Flüssigkeitsstrom der Pumpe ragenden Widerstandssonde bewirkt, die sich in einem Schraubrohrstutzen befinden kann, wobei eine Überwachungsfunktion nur bei horizontal angeordneten Pumpen möglich ist.

Eine Schutzvorrichtung gegen den Trockenlauf des Dosierkolbens einer Membranpumpe ist in EP-B1-0 129 187 beschrieben. Dabei sind in einer Vorförderkammer eines Pumpenkopfkörpers Meßfühler oberhalb eines Minimalniveaus angeordnet, bei dem der Dosierkolben noch gerade ganz flüssigkeitsbedeckt ist. Nachgeschaltete Einrichtungen bewirken eine Leermelde-Vorwarnung und/oder das Abschalten der Pumpe.

DE-C2-100 35 458 sieht einen Drucksensor vor, der bei einer Kreiselpumpe in ein Fühlergehäuse eingebaut ist; dieses weist einen Ansatz für eine Röhrchensonde auf, die einen ins Innere ragenden Temperatursensor trägt. Mit einem derartigen Kombinationsfühler können Druck und Temperatur im Pumpmedium gleichzeitig erfaßt werden. Auch in einem Badewasser-Umwälzsystem nach DE-U1-201 05 322 verwendet man einen wassergekühlten Pumpenantriebsmotor, dessen Welle von einer Gleitringdichtung umschlossen ist. Zwecks optimaler Raumausnutzung wird ein System vertikal angeordneter Pumpen bevorzugt. Für den Trockenlaufschutz der Gleitringdichtung wird der Pegel einer parallelen Schaltrohr-Wassersäule überwacht, insbesondere mittels kapazitiver Sensoren.

Es ist ein wichtiges Ziel der Erfindung, mit möglichst einfachen Mitteln einen verbesserten Trockenlaufschutz für Gleitringdichtungen eines Pumpensystems der letztgenannten Art zu schaffen. Damit soll dessen Betriebsfähigkeit dauerhaft wirksam gesichert werden. Niedrige Fertigungs- und Montagekosten werden ebenso angestrebt wie hohe Funktionssicherheit.

Hauptmerkmale der Erfindung sind in Anspruch 1 angegeben. Ausgestaltungen sind Gegenstand der Ansprüche 2 bis 9.

Bei einem Trockenlaufschutz für eine Gleitringdichtung eines Pumpensystems, mit einem Antriebs-Elektromotor und mit einer für Motor und Pumpe gemeinsamen Welle, die von der Gleitringdichtung umschlossen ist, an die ein Fluiddetektor sowie ein eine Trennmembran aufweisendes Magnetventil mit einer darüber befindlichen Entlüftungseinrichtung anschließt, wobei der Fluiddetektor in einem vorgebbaren Abstand oberhalb des Minimalpegels der Pumpe an oder in einer Rohrarmatur angeordnet ist, die in Höhe der Gleitringdichtung an das Pumpengehäuse angeschlossen und mit dem Magnetventil strömungsverbunden ist, sieht die Erfindung laut Anspruch 1 vor, dass eine von der Rohrarmatur räumlich getrennte Elektronikeinheit eine von dem Fluiddetektor beaufschlagte Steuer- und Auswerteeinrichtung aufweist, wobei die Ansprech- bzw. Schaltzustandsdauer der Elektronikeinheit mittels eines Stellorgans vorwählbar ist.

Dank dieser überaus einfachen Schutzanordnung wird ein Trockenlauf verhindert und das störungsfreie Arbeiten des insbesondere vertikal angeordneten Pumpensystems gewährleistet. Der Fluiddetektor erfaßt den Füllstand im Bereich der Gleitringdichtung, wobei es auf den Zustand des Mediums (Temperatur, Druck) oder auf seine Eigenschaften, z.B. elektrische Leitfähigkeit, nicht oder nur nachrangig ankommt. Sind die Dichtungs-Gleitflächen von Pumpmedium umgeben, so gibt der Fluiddetektor das Anlaufen des Antriebsmotors frei; andernfalls kann die Pumpe nicht gestartet werden. Die geschützte Gleitringdichtung, die z.B. einen verschleißfesten Faltenbalg sowie Gleitflächen aus Siliziumkarbid haben und daher wartungsfrei sein kann, bewirkt zum Pumpengehäuse samt Laufrad hin eine sichere Langzeit-Abdichtung.

Als Fluiddetektor bzw. geber kann ein elektronischer Füllstandsgrenzschalter dienen, namentlich ein kapazitiver Niveauschalter oder ein Schwinggabelsensor, bei dem eine Änderung der Schwingungsfrequenz eintritt, sobald die Schwinggabel von Flüssigkeit bedeckt ist. DE-C-44 29 236 beschreibt einen Geber mit parallelen Schwingstäben, die bei gegenphasigem Schwingen der Stäbe ein Gesamtausgangssignal und somit eine Füllstandsanzeige bewirken, während gleichphasiges Schwingen einen Signalwert Null erzeugt. Für die Zwecke des Trockenlaufschutzes benutzt man zweckmäßig eine Minimal-Sicherheitsschaltung, wobei ein elektronischer Schalter geschlossen ist, solange die Gabel in Flüssigkeit eintaucht. Er öffnet bei Störungen bzw. Stromausfall und bei Erreichen eines Grenzstandes, wenn also die Gabel außerhalb der Flüssigkeit frei schwingt.

Der Fluiddetektor ist bei dem neuartigen Trockenlaufschutz an oder in einer Rohrarmatur angeordnet. Ein kapazitiver Niveauschalter ist außen an der Verrohrung anbringbar, um abhängig vom Flüssigkeits-Füllstand berührungslos zu schalten. Einen Schwinggabelsensor baut man in die Rohrarmatur ein, bevorzugt in die Zweigzuleitung eines Kreuzverbinders. Die Positionierung erfolgt in vorgebbarem Abstand, z.B. 100 mm oberhalb des Minimalniveaus der Pumpe, so dass die Position bzw. Eintauchtiefe der Gleitringdichtung im Pumpmedium sicher erfaßt wird.

Ein wichtiges Merkmal ist, dass bei Inbetriebnahme der Pumpe, d.h. beim Luftansaugen, automatisch eine Entlüftung stattfindet. Ohne saugseitigen Zulauf ist kein Einschalten und kein Betrieb der Pumpe möglich. Erfindungsgemäß ist oberhalb der Gleitringdichtung und oberhalb des am Ende der Verrohrung befestigten Magnetventils eine mit diesem betätigungsverbundene Entlüftungseinrichtung vorhanden, speziell in Form eines mit einem Schlauch ausgestatteten Luftablasses. Manuelles Entlüften erübrigt sich dadurch.

Der Luftablaß ist durch das mit einer Trennmembran versehene Magnetventil betätigbar. Die Entlüftungs-Intervalle lassen sich willkürlich oder regelmäßig überwachen. Zum Schutz des Magnetventils vor Verschmutzung und Verstopfung ist ihm ein Filter vorgeordnet. Der Schmutzfänger ist insbesondere ein Edelstahlsieb, das nach Öffnen einer Verschraubung entnommen und ausgewechselt oder auch gereinigt und wieder eingesetzt werden kann.

Mit besonderem Vorteil ist das Magnetventil an eine von der Pumpe räumlich getrennte Steuerelektronik angeschlossen, die unter Auswertung der Signale des Fluiddetektors im Störfall eingreift und den Motor abschaltet, bevor ein Gleitringdichtungsschaden entsteht. Die elektronische Steuereinheit umfaßt eine Stromversorgung, bevorzugt mit Niederspannung von z.B. 24 V, sowie eine Steuer- und Auswerteeinrichtung. Sehr zweckmäßig ist ein mit max. 250 V betreibbarer Schaltkontakt, der ein Motorschaltschütz oder eine speicherprogrammierbare Steuerung (SPS) beeinflußt. Hohe Sicherheit gewährleistet ein potentialfreier Ausgang, so dass keine elektrische Spannung bei Wassermangel und bei der Pumpenabschaltung anstehen kann.

Die Elektronik weist bevorzugt LED-Anzeigen für Betriebszustände auf. So kann man mit einem Blick erkennen, welcher Schaltzustand momentan gegeben ist. Auch jede Störung wird sofort deutlich angezeigt. Zum Verändern des Schaltverhaltens der Elektronik dient ein Stellelement, namentlich ein Codierschalter oder Potentiometer, mit dem die Ansprechgeschwindigkeit bzw. -trägheit einstellbar ist. Beispielsweise lassen sich Zustandsdauern von 2,5 s bis 20 s wählen und in einer Segmentanzeige darstellen, z.B. mit siebenstelligem, alphanumerischem Code. Die variablen Schaltzeiten haben den Vorteil, dass im System befindliche Luft problemlos ohne Unterbrechung des Pumpenbetriebs abgelassen werden kann, weil der Motor dabei nicht durch die Steuerung abgeschaltet werden muß.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
Fig. 1 eine Schnittansicht eines Pumpensystems mit Trockenlaufschutz,
Fig. 1a eine Seitenansicht eines Trockenlaufschutzes mit kapazitivem Fluiddetektor,
Fig. 1b eine Stirnansicht des Trockenlaufschutzes von Fig. 1a mit Steuerelektronik,
Fig. 1c eine Draufsicht auf einen kapazitiven Niveauschalter,
Fig. 2a eine Seitenansicht eines Trockenlaufschutzes mit Schwinggabelsensor,
Fig. 2b eine Stirnansicht des Trockenlaufschutzes von Fig. 2a mit Steuerelektronik und
Fig. 2c eine Draufsicht auf einen Schwinggabelsensor.

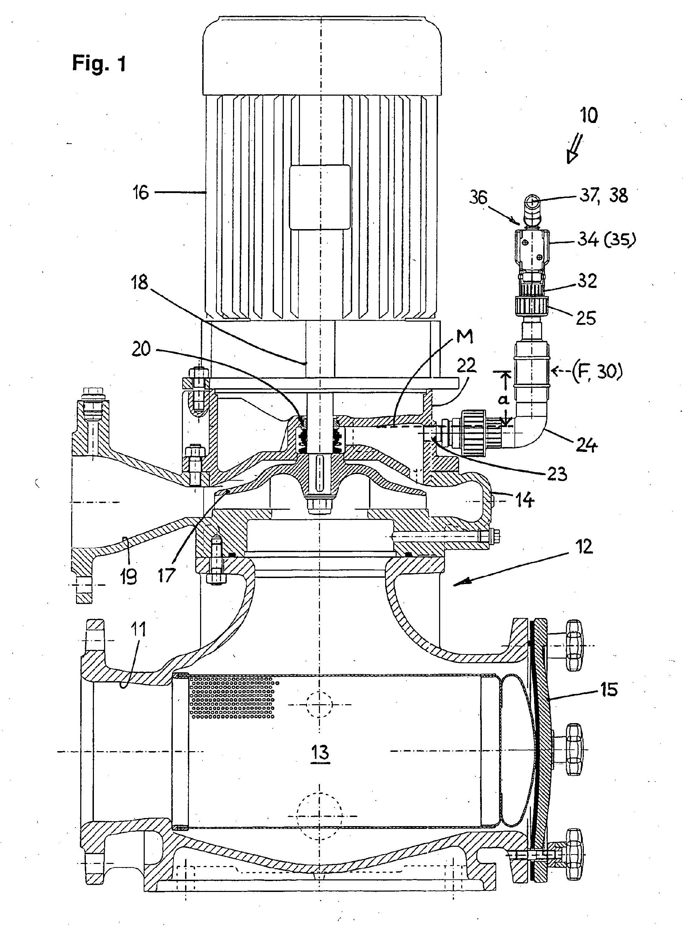

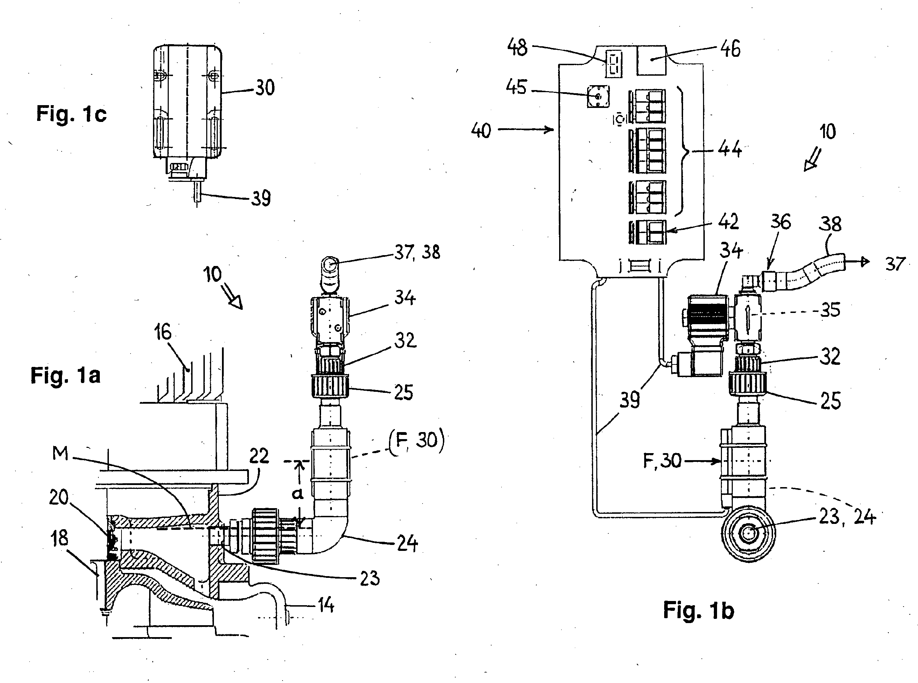

Man erkennt in Fig. 1 eine allgemein mit 10 bezeichnete Trockenlauf-Schutzvorrichtung als Bestandteil oder Zubehör eines Pumpensystems 12. Die bevorzugt vertikal aufgestellte Pumpe hat einen Ansaugstutzen 11 und einen Filterkorb 13 sowie ein Pumpengehäuse 14 und einen Deckel 15. Ein Antriebsmotor 16 treibt ein Laufrad 17, das durch eine gemeinsame Welle 18 mit dem Motor 16 verbunden ist. Vom Pumpengehäuse 14 geht ein Druckstutzen 19 zu einem (nicht dargestellten) Verbraucher.

Innerhalb des Pumpengehäuses 14 ist die Welle 18 von einer Gleitringdichtung 20 umschlossen. An der Pumpenrückwand 22 befindet sich ein Anschluß 23 für eine Rohrarmatur 24. Diese ist durch eine Verschraubung 25 und ein vorgeschaltetes Filter 32 mit einem Magnetventil 34 verbunden, das eine Trennmembran 35 aufweist, um eine Entlüftungseinrichtung 36 zu betätigen. Hieran schließt ein Luftablaß 37 mit einem Schlauch 38 an.

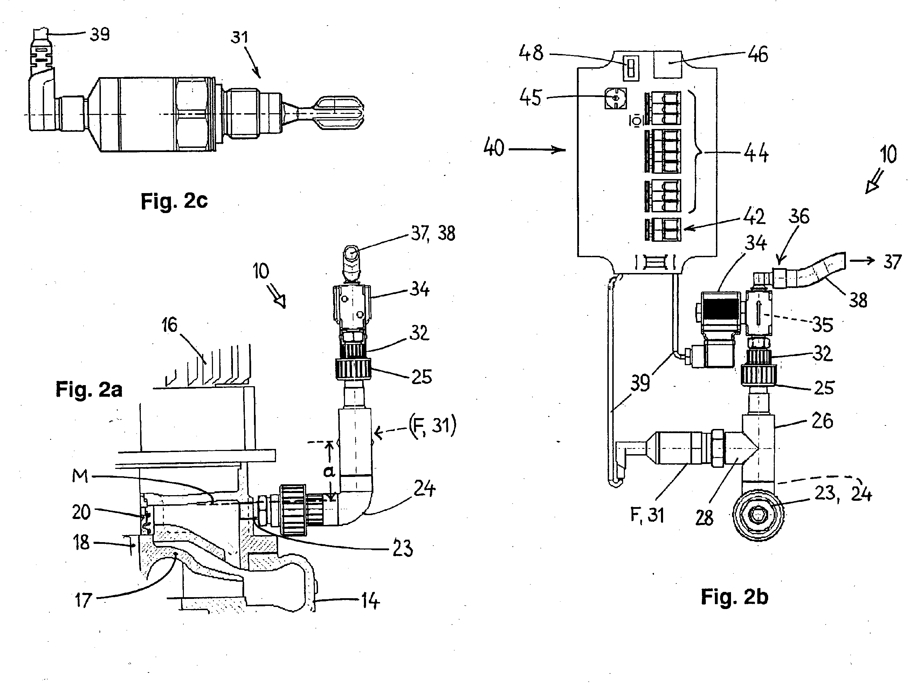

Für den Trockenlaufschutz 10 ist ein Fluiddetektor F wichtig, der in vorgebbarem Abstand a oberhalb eines Minimalpegels M angeordnet ist, bei dem die Gleitringdichtung 20 vom Pumpmedium umgeben ist. Der Fluiddetektor F kann als kapazitiver Niveauschalter 30 (Fig. 1a bis 1c) oder auch als Schwinggabelsensor 31 (Fig. 2a bis 2c) ausgebildet sein.

Über Zuleitungen 39 ist der Trockenlaufschutz 10 mit einer davon räumlich getrennten Elektronikeinheit 40 verbunden. Man erkennt Steckanschlüsse für einen (schematisch bezeichneten) Stromversorgungsteil 42 sowie für eine (ebenfalls im Einzelnen nicht dargestellte) Steuer- und Auswerteeinrichtung 44. Ein Stellorgan 45, namentlich ein Potentiometer, ermöglicht Veränderungen der Ansprechgeschwindigkeit bzw. Schaltzustandsdauer. Allgemein mit 46 bezeichnete LED-Anzeigen und eine Segmentanzeige 48 gestatten es, momentane Betriebszustände zu erkennen bzw. abzulesen.

Die Funktion des Trockenlaufschutzes beruht darauf, dass der Fluiddetektor F, z.B. ein kapazitiver Niveauschalter 30 oder ein Schwinggabelsensor 30, den Füllstand im Bereich der Gleitringdichtung 30 erfaßt. Sind deren Gleitflächen im Pumpmedium eingetaucht, so kann der Antriebsmotor 16 die Pumpe 12 starten. Wenn jedoch die Gleitringdichtung 20 nicht vom Pumpmedium umgeben ist, erfaßt der Sensor bzw. Detektor F dies und die Steuerelektronik 40 verhindert das Anlaufen des Motors 16, der ein für Pumpenantriebe ausgelegter 400-V-Motor mit Wasserkühlung sein kann.

Außerdem wird das vorzugsweise edelstahlgekapselte Magnetventil 34 angesteuert, so dass die im Bereich der Gleitringdichtung 20 befindliche Luft durch den Auslaß 37 abfließt und Pumpmedium nachströmen kann. Sobald dieses die Gleitringdichtung 20 umgibt, meldet der Fluiddetektor F das an die Elektronik 40, die daraufhin das Magnetventil 34 abfallen läßt und den Motoranlauf bewirkt. Kommt es während des Betriebes zu einem Mangel an Pumpmedium, so erfaßt der Fluiddetektor F dies, worauf die Elektronik 40 den Motor 16 abschaltet und den Raum um die Gleitringdichtung 20 - nahe der Pumpenrückwand 22 - entlüftet.

Das Schaltverhalten der Elektronik 40 ist an den LED-Anzeigen 46 erkennbar. Mit einem Codierschalter oder Potentiometer 45 kann man es verändern, z.B. durch Wahl einer Ansprechdauer zwischen 2,5 s und 20 s. Die eingestellte Schaltzeit wird an der Segmentanzeige 48 vorzugsweise mittels eines alphanumerischen Siebensegment-Codes angezeigt, während die LED-Anzeigen 46 zumindest für folgende Betriebszustände vorgesehen sind:
- A: Fluiddetektor F nicht im Medium (Minimalpegel M unterschritten)
- B: Magnetvertil 34 zur Entlüftung geöffnet
- C: Motor 16 abgeschaltet
- D: (sonstige) Störung.

Die Erfindung ist nicht auf eine der vorbeschriebenen Ausführungsformen beschränkt, sondern in vielfältiger Weise abwandelbar. Hervorzuheben ist, dass der neuartige Trockenlaufschutz 10 unabhängig von der Art des Mediums funktioniert, so dass nicht nur Flüssigkeitspegel, sondern auch Niveaustände von z.B. körnigem Material, Streugut u.dgl. erfaßt werden. Sein zuverlässiger Einsatz ist daher bei Pumpensystemen für beliebige Medien möglich, z.B. auch bei Bädern mit chlor- oder solehaltigem Badewasser. Wartung und Instandhaltung sind wirtschaftlich, weil bei Ausfall einzelner Komponenten jede einzelne ausgetauscht werden kann, so dass es nicht nötig ist, die Vorrichtung 10 insgesamt zu ersetzen.

Zusammenfassend ist festzuhalten, dass bei einem Trockenlaufschutz 10 für eine Gleitringdichtung 20 eines Pumpensystems, das eine für einen Antriebs-Elektromotor 16 und eine Pumpe 12 gemeinsame, von der Gleitringdichtung 20 umschlossene Welle 18 aufweist, erfindungsgemäß an das Pumpengehäuse 14 eine Rohrarmatur 24 mit einem Fluiddetektor F anschließt. Oberhalb diesem befindet sich ein Magnetventil 34. Der Fluiddetektor F kann ein kapazitiver Niveauschalter 30, ein Schwinggabelsensor 31 o.dgl. sein, und zwar in vorgegebenem Abstand a oberhalb des Minimalpegels M der Pumpe 12. Eine durch das Magnetventil 34 betätigbare Entlüftungseinrichtung 36, die einen mit einem Schlauch 38 ausgestatteten Luftablaß 37 aufweist, ist oberhalb des mit einer Trennmembran 35 versehenen, filtergeschützten Magnetventils 34 vorhanden. Dieses und der Fluiddetektor F sind an eine Elektronik 40 angeschlossen, deren räumliche Anordnung frei wählbar und nicht an den Standort des Pumpensystems oder eines Behälters gebunden ist. Insbesondere kann die Steuereinheit 40 vom Pumpengehäuse 14 getrennt sein und eine Stromversorgung 42 sowie eine Steuer- und Auswerteeinrichtung 44 mit Anzeigemitteln für Betriebszustände aufweisen, z.B. LED-Anzeigen 46. Die Ansprech- bzw. Schaltdauer der Elektronik 40 ist mittels eines Stellorgans, z.B. eines Potentiometers 45, in einer Segmentanzeige 48 darstellbar, beispielsweise mit siebenstelligem, alphanumerischem Code.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

**Bezugszeichenliste**

| | | | |
|---|---|---|---|
| | a Abstand | | |
| | F Fluiddetektor | | |
| | M Minimalpegel | | |
| 10 | Trockenlauf-Schutzvorrichtung | 30 | kapazitiver Niveauschalter |
| 12 | Pumpensystem | 31 | Schwinggabelsensor |
| 13 | Filterkorb | 32 | Filter / Sieb |
| 14 | Pumpengehäuse | 34 | Magnetventil |
| 15 | Deckel | 35 | Trennmembran |
| 16 | Antriebsmotor | 36 | Entlüftungseinrichtung |
| 17 | Laufrad | 37 | Luftablaß |
| 18 | Welle | 38 | Schlauch |
| 19 | Druckstutzen | 39 | Zuleitungen |
| 20 | Gleitringdichtung | 40 | Elektronik(einheit) |
| 22 | Rückwand | 42 | Stromversorgungsteil |
| 23 | Anschluß | 44 | Steuer- / Auswerteeinrichtung |
| 24 | Rohrarmatur | 45 | Stellorgan / Potentiometer |
| 25 | Verschraubung | 46 | LED-Anzeigen |
| 26 | Kreuzverbinder / T-Stück | 48 | Segmentanzeige |
| 28 | Zweigzuleitung | | |

## Patentansprüche

1. Trockenlaufschutz für eine Gleitringdichtung (20) eines Pumpensystems, mit einem Antriebs-Elektromotor (16) und mit einer für Motor (16) und Pumpe (12) gemeinsamen Welle (18), die von der Gleitringdichtung (20) umschlossen ist, an die ein Fluiddetektor (F) sowie ein eine Trennmembran (35) aufweisendes Magnetventil (34) mit einer darüber befindlichen Entlüftungseinrichtung (36) anschließt, wobei der Fluiddetektor (F) in einem vorgebbaren Abstand (a) oberhalb des Minimalpegels (M) der Pumpe (12) an oder in einer Rohrarmatur (24) angeordnet ist, die in Höhe der Gleitringdichtung (20) an das Pumpengehäuse (14) angeschlossen und mit dem Magnetventil (34) strömungsverbunden ist, **dadurch gekennzeichnet, dass** eine von der Rohrarmatur (24) räumlich getrennte Elektronikeinheit (40) eine von dem Fluiddetektor (F) beaufschlagte Steuer- und Auswerteeinrichtung (44) aufweist, wobei die Ansprech- bzw. Schaltzustandsdauer der Elektronikeinheit (40) mittels eines Stellorgans vorwählbar ist.

2. Trockenlaufschutz nach Anspruch 1, **dadurch gekennzeichnet, dass** der Fluiddetektor (F) ein bevorzugt außen an der Rohrarmatur (24) angebrachter kapazitiver Niveauschalter (30) ist.

3. Trockenlaufschutz nach Anspruch 1, **dadurch gekennzeichnet, dass** der Fluiddetektor (F) ein in die Rohrarmatur (24) eingebauter Schwinggabelsensor (31) ist.

4. Trockenlaufschutz nach Anspruch 3, **dadurch gekennzeichnet, dass** der Schwinggabelsensor (31) in der Zweigzuleitung (28) eines Kreuzverbinders oder T-Stücks (26) sitzt.

5. Trockenlaufschutz nach einem der Ansprüche 1 bis 4, **dadurch gekennzeichnet, dass** die oberhalb des Magnetventils (34) angeordnete, von ihm betätigbare Entlüftungseinrichtung (36) einen mit einem Schlauch (38) ausgestatteten Luftablaß (37) aufweist.

6. Trockenlaufschutz nach einem der Ansprüche 1 bis 5, **dadurch gekennzeichnet, dass** dem Magnetventil (34) ein Filter (32) vorgeordnet ist.

7. Trockenlaufschutz nach Anspruch 6, **dadurch gekennzeichnet, dass** das Filter (32) ein ausbau- und/oder austauschbares Edelstahlsieb aufweist.

8. Trockenlaufschutz nach einem der Ansprüche 1 bis 7, **dadurch gekennzeichnet, dass** die Elektronikeinheit (40) eine Stromversorgung (42) sowie Anzeigemittel für Betriebszustände aufweist, z.B. LED-Anzeigen (46).

9. Trockenlaufschutz nach einem der Ansprüche 1 bis 8, **dadurch gekennzeichnet, dass** die Ansprech- bzw. Schaltzustandsdauer der Elektronikeinheit (40) in einer Segmentanzeige (48) darstellbar ist, beispielsweise mit siebenstelligem alphanumerischem Code.

## Claims

1. Dry-running protection device for a slide ring seal (20) of a pump system, comprising an electric drive motor (16) and a common shaft (18) for both the motor (16) and the pump (12), which shaft is enclosed by the slide ring seal (20), to which are connected a fluid detector (F) and a solenoid valve (34), which comprises a separating diaphragm (35) and a ventilation apparatus (36) arranged above said separating diaphragm, the fluid detector (F) being arranged at a predeterminable distance (a) above the minimum level (M) of the pump (12) on or in a pipe fitting (24) which is attached to the pump housing (14) at the same height as the slide ring seal (20) and is connected to the solenoid valve (34) in terms of flow, **characterised in that** an electronics unit (40) which is spatially separate from the pipe fitting (24) comprises a control and evaluation apparatus (44) which is supplied by the fluid detector (F), the response time or switching status time of the electronics unit (40) being preselectable by means of an actuator.

2. Dry-running protection device according to claim 1, **characterised in that** the fluid detector (F) is a capacitive level switch (30) attached preferably to the outside of the pipe fitting (24).

3. Dry-running protection device according to claim 1, **characterised in that** the fluid detector (F) is a tuning fork sensor (31) installed in the pipe fitting (24).

4. Dry-running protection device according to claim 3, **characterised in that** the tuning fork sensor (31) is arranged in the branch supply line (28) of a cross connector or a T-piece (26).

5. Dry-running protection device according to any of claims 1 to 4, **characterised in that** the ventilation device (36) which is arranged above the solenoid valve (34) and can be operated thereby comprises an air outlet (37) equipped with a tube (38).

6. Dry-running protection device according to any of claims 1 to 5, **characterised in that** a filter (32) is arranged upstream of the solenoid valve (34).

7. Dry-running protection device according to claim 6, **characterised in that** the filter (32) comprises a stainless steel sieve which can be removed and/or replaced.

8. Dry-running protection device according to any of claims 1 to 7, **characterised in that** the electronics unit (40) has a current supply (42) and means for displaying operating conditions, e.g. LED displays (46).

9. Dry-running protection device according to any of claims 1 to 8, **characterised in that** the response time or switching status time of the electronics unit (40) can be displayed in a segment display (48), for example by means of a seven-digit alphanumerical code.

## Revendications

1. Protection contre un fonctionnement à sec pour une garniture étanche à anneau glissant (20) d'un système de pompe, comprenant un moteur électrique d'entraînement (16) et un arbre (18) commun au moteur (16) et à une pompe (12), lequel arbre est enserré par la garniture étanche à anneau glissant (20) et sur lequel un détecteur de fluide (F) ainsi qu'une électrovanne (34) présentant une membrane séparatrice (35) se raccordent à un dispositif de purge d'air (36) disposé au-dessus, dans laquelle le détecteur de fluide (F) est aménagé à une distance prédéterminable (a) au-dessus du niveau minimal (M) de la pompe (12) sur ou dans une armature tubulaire (24), qui est raccordée, à hauteur de la garniture étanche à anneau glissant (20), au boîtier de pompe (14) et est en communication fluidique avec l'électrovanne (34), **caractérisée en ce qu'**une unité électronique (40) séparée spatialement de l'armature tubulaire (24) présente un dispositif de commande et d'évaluation (44) alimenté par le détecteur de fluide (F), dans laquelle la durée de réponse ou d'état de commutation de l'unité électronique (40) peut être présélectionnée au moyen d'un organe de réglage.

2. Protection contre un fonctionnement à sec selon la revendication 1, **caractérisée en ce que** le détecteur de fluide (F) est un commutateur de niveau capacitif (30) de préférence monté extérieurement sur l'armature tubulaire (24).

3. Protection contre un fonctionnement à sec selon la revendication 1, **caractérisée en ce que** le détecteur de fluide (F) est un capteur de fourche de balancier (31) incorporé à l'armature tubulaire (24).

4. Protection contre un fonctionnement à sec selon la revendication 3, **caractérisée en ce que** le capteur de fourche de balancier (31) est installé dans la conduite de dérivation (28) d'un raccord croisé ou d'une pièce en T (26).

5. Protection contre un fonctionnement à sec selon l'une quelconque des revendications 1 à 4, **caractérisée en ce que** le dispositif de purge d'air (36) aménagé au-dessus de l'électrovanne (34) et commandé par celle-ci présente une décharge d'air (37) équipée d'un tuyau (38).

6. Protection contre un fonctionnement à sec selon l'une quelconque des revendications 1 à 5, **caractérisée en ce qu'**un filtre (32) est aménagé en amont de l'électrovanne (34).

7. Protection contre un fonctionnement à sec selon la revendication 6, **caractérisée en ce que** le filtre (32) présente un tamis en acier fin démontable et/ou échangeable.

8. Protection contre un fonctionnement à sec selon l'une quelconque des revendications 1 à 7, **caractérisée en ce que** l'unité électronique (40) présente une alimentation en courant (42) ainsi que des moyens d'affichage pour les états de fonctionnement, par exemple des affichages LED (46) .

9. Protection contre un fonctionnement à sec selon l'une quelconque des revendications 1 à 8, **caractérisée en ce que** la durée de réponse ou d'état de fonctionnement de l'unité électronique (40) peut être illustrée dans un affichage segmentaire (48), par exemple avec un code alphanumérique à sept positions.
